# DEMANDE DE BREVET EUROPEEN

(11) **EP 1 731 800 A1**
(43) Date de publication de la demande: **13.12.2006**
(21) Numéro de dépôt: 06300530.0
(22) Date de dépôt: 29.05.2006
(51) Int. Cl.: F16H 57/04

(54) **Boîte de vitesses avec pompe de lubrification des pignons**

(30) Priorité: 09.06.2005 FR 0505873
(71) Demandeur: Renault s.a.s., 92100 Boulogne Billancourt (FR)
(72) Inventeur: Buannec, Michel, 78480 Verneuil sur Seine (FR); Mendes, Paulo, 27950 Saint-Marcel (FR)

(57) **Abrégé**

Boîte de vitesses 1 pour moteur de véhicule automobile, comprenant un dispositif d'embrayage muni d'une cloche d'embrayage 11 reliée au moteur, une pluralité d'arbres parallèles 8, 9, 10, 20, 21 munis de pignons 34 et une pompe à huile 24 de lubrification des pignons. La boîte de vitesses comprend un compartiment d'embrayage 2, un compartiment séparé 3 contenant les pignons, avec un moyen d'étanchéité 12, 13 entre les deux compartiments. La pompe précitée est entraînée par la cloche de l'embrayage 14.

## Description

L'invention concerne les boîtes de vitesses de véhicule automobile, à arbres parallèles, munies d'une pompe de lubrification des pignons.

Dans ce domaine, on a proposé des boîtes de vitesses munies d'une pompe à huile, située à l'intérieur du carter de la boîte de vitesses, et entraînée mécaniquement par un engrènement avec la roue du différentiel. Un tuyau d'huile part de la pompe et alimente l'intérieur des arbres munis des pignons à lubrifier. De telles boîtes de vitesses présentent l'inconvénient de ne lubrifier les pignons que lorsque le véhicule est en mouvement de sorte que les pignons doivent également être lubrifiés par barbotage, c'est-à-dire que les dentures des pignons trempent dans l'huile s'écoulant dans le bas de la boîte. L'huile convenant à la lubrification des pignons est visqueuse de sorte que le barbotage des pignons dégrade le rendement énergétique de la boîte de vitesses. Un autre inconvénient de ce type de boîte est que certains pignons, montés à rotation sur un moyeu, nécessitent une lubrification sous pression de leur surface de roulement sur le moyeu. Cette lubrification n'est pas compensée par un barbotage, et ne peut pas dépendre du mouvement du véhicule.

Le document DE 198 21 164 décrit une boîte de vitesses munie de deux embrayages hydrauliques alimentés par une pompe à huile qui alimente également le circuit de lubrification des pignons. Ce type de boîte de vitesses présente l'inconvénient d'imposer pour la lubrification des pignons une huile convenant aux embrayages. Or, les pignons de boîte de vitesses réclament une huile plus visqueuse que les embrayages. Cette solution s'accompagne également d'un barbotage des pignons dans l'huile en bas de boîte.

L'invention propose une boîte de vitesses qui résout ces inconvénients et notamment qui assure une lubrification des pignons par un circuit d'huile sous pression sans dépendre du déplacement du véhicule et qui réduit le barbotage des pignons dans l'huile de lubrification.

Selon un mode de réalisation de l'invention, la boîte de vitesses pour moteur de véhicule automobile comprend un dispositif d'embrayage muni d'une cloche d'embrayage reliée au moteur, une pluralité d'arbres parallèles munis de pignons et une pompe à huile de lubrification des pignons. La boîte de vitesses comprend un compartiment d'embrayage, un compartiment séparé contenant les pignons, avec un moyen d'étanchéité entre les deux compartiments. La pompe précitée est entraînée par la cloche de l'embrayage ou par une partie du dispositif d'embrayage reliée au moteur.

Dans une telle boîte de vitesses, la pompe de lubrification des pignons est apte à fournir de l'huile sous pression dès que le moteur tourne. Il est possible d'amener de l'huile sous pression dans le moyeu sur lequel le pignon est monté à rotation, ce qui permet de lubrifier à la fois la surface de roulement du pignon et ses dentures. Un barbotage des pignons dans l'huile n'est plus nécessaire.

Avantageusement, un circuit d'huile de lubrification sous pression est apte à lubrifier au moins un pignon même lorsque le niveau d'huile dans le compartiment séparé est inférieur à la plus basse denture des pignons du compartiment séparé.

Avantageusement, la pompe de lubrification des pignons est immergée dans le compartiment séparé et est entraînée par un arbre d'entraînement, traversant de manière étanche une paroi de séparation entre le compartiment d'embrayage et le compartiment séparé. Ledit arbre d'entraînement est entraîné directement ou indirectement par une partie du dispositif d'embrayage reliée au moteur.

Avantageusement, le compartiment d'embrayage comprend au moins un embrayage à huile alimenté par une deuxième pompe, entraînée mécaniquement par une roue dentée intermédiaire engrenant avec une denture solidaire de la cloche d'embrayage. L'arbre d'entraînement, entraînant la pompe de lubrification des pignons peut être muni d'une denture engrenant avec la roue dentée intermédiaire, et peut être parallèle aux arbres du compartiment séparé munis des pignons.

Selon une variante, la boîte de vitesses comprend un pignon monté libre en rotation autour d'un moyeu, le moyeu étant monté à rotation sur l'un des arbres de la boîte de vitesses, le circuit de lubrification distribuant de l'huile sous pression dans le moyeu.

D'autres caractéristiques et avantages de l'invention apparaîtront à la lecture de la description détaillée d'un mode de réalisation de la boîte de vitesses pris à titre d'exemple non limitatif et illustré par les dessins annexés, sur lesquels :
- la figure 1 est une représentation schématique transversale des arbres de la boîte de vitesses selon le plan I-I de la figure 2 ;
- la figure 2 est une coupe de la boîte de vitesses selon le plan de coupe brisé II-II de la figure 1 ; et
- la figure 3 est une coupe du pignon monté sur moyeu libre.

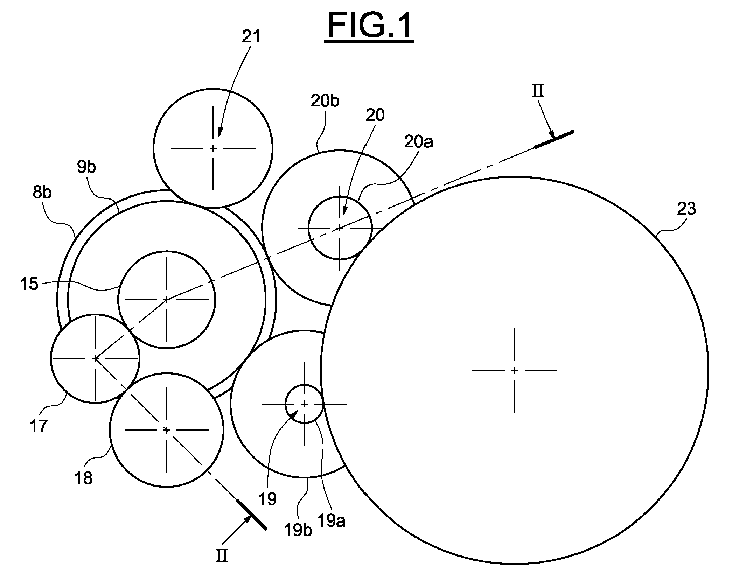

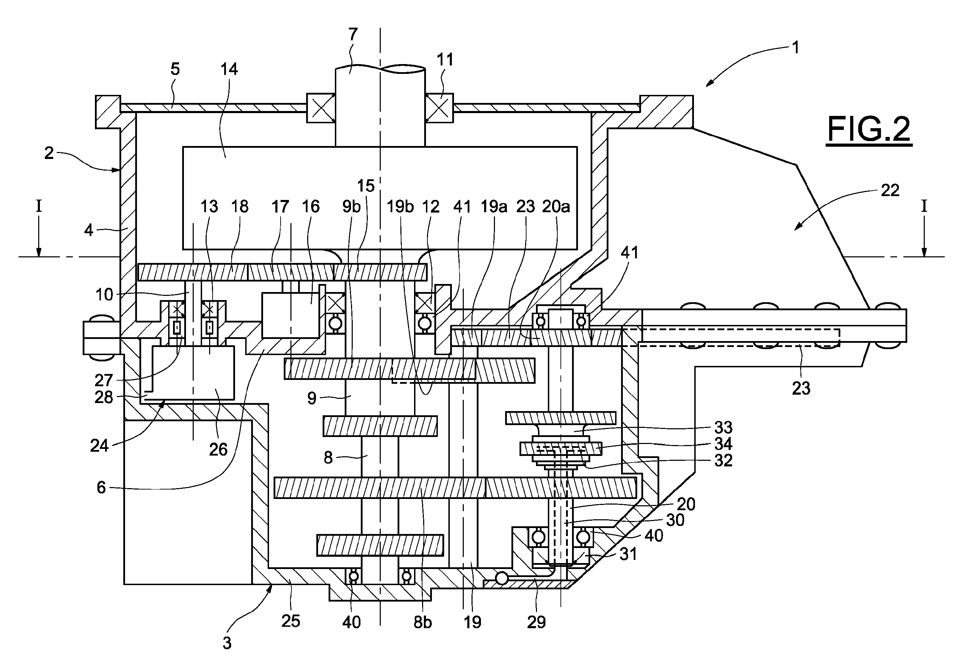

Comme illustré sur les figures 1 et 2, la boîte de vitesses 1 comprend un compartiment d'embrayage 2 et un compartiment séparé 3. Le compartiment d'embrayage 2 est délimité par un carter d'embrayage 4, un couvercle d'embrayage 5 et une paroi de séparation 6 formant le fond du carter d'embrayage 4. Le couvercle d'embrayage 5 est traversé par un arbre moteur 7 relié à un vilebrequin du moteur, non représenté. La paroi de séparation 6 est traversée par un arbre primaire plein 8 et un arbre primaire creux 9 coaxiaux et par un arbre d'entraînement 10 d'une pompe 24 de lubrification des pignons.

Le compartiment d'embrayage 2 comprend de l'huile d'embrayage maintenue à l'intérieur du compartiment d'embrayage 2 grâce à une série de joints d'étanchéité. Un joint d'étanchéité 11 assure l'étanchéité entre l'arbre moteur 7 et le couvercle d'embrayage 5. Un joint d'étanchéité primaire 12 assure l'étanchéité entre l'arbre primaire creux 9 et la paroi de séparation 6. Un deuxième joint d'étanchéité, non représenté, assure l'étanchéité entre l'arbre primaire plein 8 et l'arbre primaire creux 9. Un joint d'étanchéité 13 est disposé entre l'arbre d'entraînement 10 et la paroi de séparation 6.

Le compartiment d'embrayage 2 comprend une cloche d'embrayage 14 munie d'une denture 15 et d'une pompe à huile d'embrayage 16. La pompe à huile d'embrayage 16 est entraînée selon un axe parallèle à l'arbre moteur 7 et aux arbres primaires 8 et 9, par une roue dentée intermédiaire 17 engrenant avec la denture 15 de la cloche d'embrayage 14. L'arbre d'entraînement 10 est équipé d'une denture 18 engrenant avec la roue dentée intermédiaire 17.

Le compartiment séparé 3 renferme des parties, de l'arbre primaire plein 8 et de l'arbre primaire creux 9, munies de pignons. Le compartiment séparé 3 renferme également un arbre secondaire bas 19, un arbre secondaire haut 20, un arbre intermédiaire 21 (figure 1), un différentiel 22 muni d'une couronne 23, et une pompe 24 de lubrification des pignons du compartiment séparés 3. L'arbre primaire plein 8, les deux arbres secondaires bas 19 et haut 20 et l'arbre intermédiaire 21 sont chacun montés en rotation sur une paire de paliers 40, 41, dont l'un 40 est fixé sur une paroi extérieure 25 du compartiment séparé 3, et l'autre 41 est fixé sur la paroi de séparation 6. L'arbre secondaire bas 19 et secondaire haut 20 sont tous les deux équipés d'un pignon d'attaque 19a et 20a engrenant avec la couronne de différentiel 23.

La pompe 24 de lubrification des pignons comprend un corps 26 fixé sur la paroi de séparation 6 et est entraînée par l'arbre d'entraînement 10 monté à rotation sur un palier 27 fixé dans la paroi de séparation 6. La pompe 24 de lubrification des pignons comprend une entrée d'huile 28 située en un point bas du compartiment séparé 3, de manière à récupérer l'huile de lubrification ruisselant éventuellement des pignons.

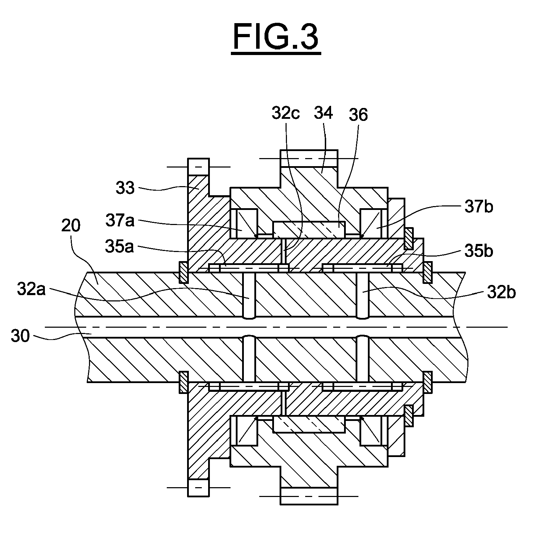

Un circuit d'huile de lubrification des pignons est alimenté sous pression par la pompe 24. Le circuit peut comprendre un canal 29 creusé dans l'épaisseur de la paroi 25 ou, en variante, une canalisation tubulaire indépendante de la paroi 25. L'arbre secondaire haut 20 est muni d'un canal central 30 communiquant avec le canal 29, de manière étanche grâce à un joint d'étanchéité 31. Le canal central 30 débouche dans un orifice radial 32, permettant de lubrifier un moyeu 33 autour duquel tourne un pignon 34, dont la construction est visible sur la figure 3.

L'arbre moteur 7 entraîne en rotation la cloche d'embrayage 14 dès que le moteur est en mouvement, et ceci indépendamment du fait que l'embrayage soit en prise et entraîne ou pas l'un des arbres primaires 8 ou 9. Ainsi, la pompe 24 de lubrification des pignons est entraînée en rotation par la denture 18 de l'arbre d'entraînement 10, la roue dentée intermédiaire 17 et la denture 15 de la cloche d'embrayage 14, et ceci dès que le moteur tourne sans attendre que le véhicule soit en mouvement.

Le moyeu 33 et le pignon 34 reçoivent de l'huile sous pression par le canal central 30 et le circuit de lubrification 29 dès que le moteur tourne, de sorte qu'il n'y a pas besoin d'attendre que la température de l'huile augmente et que sa viscosité baisse. De plus, l'huile de lubrification, lubrifiant l'alésage du moyeu 33 ou des pignons de la boîte de vitesses, s'écoule le long des pignons et atteint les dentures, de sorte qu'il n'y a pas besoin que les pignons barbotent dans de l'huile pour que les dentures des pignons soient lubrifiées. Ce mode de lubrification, que l'on peut appeler « lubrification sèche », a l'avantage de réduire fortement les frottements hydrauliques des pignons dans l'huile de lubrification et d'améliorer le rendement énergétique global de la boîte de vitesses.

Comme illustré sur la figure 3, le moyeu 33 est monté à rotation sur l'arbre secondaire haut 20 grâce à deux paliers à aiguilles 35a et 35b, alimentés en huile de lubrification sous pression par deux orifices radiaux 32a et 32b. Le pignon 34 est monté à rotation autour du moyeu 33 grâce à une bague 36 en alliage cuivreux. Un canal radial 32c relie la bague 36 à la cage du palier à aiguilles 35a, de sorte que la bague 36 est également alimentée en huile sous pression. La bague 36, alimentée en huile sous pression, permet un diamètre de palier plus important que des paliers à aiguilles pour un même niveau de contrainte exercé sur le pignon 34 et une même plage de vitesse de rotation. Des joints d'étanchéité 37a et 37b entourent de part et d'autre la bague 36.

Un système de synchronisation, non représenté sur la figure 3, peut solidariser en rotation le moyeu 33 avec le pignon 34 sans entraîner également l'arbre secondaire haut 20. Grâce à la lubrification par un circuit d'huile sous pression, un pignon de renvoi constitué par le moyeu 33 et le pignon 34 peut être monté sur un arbre secondaire sans entraîner en rotation ledit arbre secondaire.

La lubrification du moyeu 33 et du pignon 34 a lieu même si aucun des pignons ne barbote dans l'huile, c'est-à-dire même si le niveau d'huile dans le compartiment séparé est inférieur à la plus basse denture des pignons renfermé dans le compartiment séparé.

## Revendications

1. Boîte de vitesses (1) pour moteur de véhicule automobile, comprenant une pluralité d'arbres parallèles (8, 9, 19, 20, 21) munis de pignons (34) dont au moins un arbre primaire (8, 9), relié au moteur par un dispositif d'embrayage, et coaxial avec le dispositif d'embrayage, lequel dispositif est muni d'une cloche d'embrayage (14) reliée au moteur, la boîte de vitesses (1) comprenant un compartiment d'embrayage (2), un compartiment séparé (3) contenant les pignons, avec un moyen d'étanchéité (12, 13) entre les deux compartiments, et comprenant une pompe à huile (24) de lubrification des pignons, la pompe à huile (24) étant entraînée par la cloche de l'embrayage (14), **caractérisée par le fait que** la pompe à huile (24) est entraînée par un arbre d'entraînement (10) non coaxial avec le ou les arbres primaires (8, 9).

2. Boîte de vitesses (1) selon la revendication 1, dans laquelle, un circuit (29) d'huile de lubrification sous pression est apte à lubrifier au moins un pignon (34) même lorsque le niveau d'huile dans le compartiment séparé (3) est inférieur à la plus basse denture des pignons du compartiment séparé (3).

3. Boîte de vitesses (1) selon l'une des revendications précédentes, dans laquelle la pompe (24) de lubrification des pignons est immergée dans le compartiment séparé (3) et est entraînée par un arbre d'entraînement (10), traversant de manière étanche une paroi de séparation (6) entre le compartiment d'embrayage (2) et le compartiment séparé (3), ledit arbre d'entraînement (10) étant entraîné directement ou indirectement par une partie (15) du dispositif d'embrayage reliée au moteur.

4. Boîte de vitesses selon l'une des revendications précédentes, dans laquelle le compartiment d'embrayage (2) comprend au moins un embrayage à huile alimenté par une deuxième pompe (16), entraînée mécaniquement par une roue dentée intermédiaire (17) engrenant avec une denture (15) solidaire de la cloche d'embrayage (14).

5. Boîte de vitesses selon les revendications 3 et 4 prises dans leur ensemble, dans laquelle l'arbre d'entraînement (10) entraînant la pompe (24) de lubrification des pignons est muni d'une denture (18) engrenant avec la roue dentée intermédiaire (17).

6. Boîte de vitesses selon l'une des revendications 3 à 5, dans laquelle l'arbre d'entraînement (10) entraînant la pompe (24) de lubrification des pignons est parallèle aux arbres du compartiment séparé (3) munis des pignons.

7. Boîte de vitesses selon l'une des revendications précédentes, comprenant un pignon (34) monté libre en rotation autour d'un moyeu (33), le moyeu étant monté à rotation sur l'un des arbres (20) de la boîte de vitesses (1), le circuit de lubrification (29) distribuant de l'huile sous pression dans le moyeu (33).

## Revendications modifiées

### Revendications modifiées conformément à la règle 86(2) CBE.

**1.** Boîte de vitesses (1) pour moteur de véhicule automobile, comprenant une pluralité d'arbres parallèles (8, 9, 19, 20, 21) munis de pignons (34) dont au moins un arbre primaire (8, 9), relié au moteur par un dispositif d'embrayage, et coaxial avec le dispositif d'embrayage, lequel dispositif est muni d'une cloche d'embrayage (14) reliée au moteur, la boîte de vitesses (1) comprenant un compartiment d'embrayage (2), un compartiment séparé (3) contenant les pignons, avec un moyen d'étanchéité (12, 13) entre les deux compartiments, et comprenant une pompe à huile (24) de lubrification des pignons, la pompe à huile (24) étant entraînée par la cloche de l'embrayage (14), **caractérisée par le fait que** la pompe à huile (24) est entraînée par un arbre d'entraînement (10) non coaxial avec le ou les arbres primaires (8, 9).

**2.** Boîte de vitesses (1) selon la revendication 1, dans laquelle, un circuit (29) d'huile de lubrification sous pression est apte à lubrifier au moins un pignon (34) même lorsque le niveau d'huile dans le compartiment séparé (3) est inférieur à la plus basse denture des pignons du compartiment séparé (3).

**3.** Boîte de vitesses (1) selon l'une des revendications précédentes, dans laquelle la pompe (24) de lubrification des pignons est immergée dans le compartiment séparé (3) et est entraînée par un arbre d'entraînement (10), traversant de manière étanche une paroi de séparation (6) entre le compartiment d'embrayage (2) et le compartiment séparé (3), ledit arbre d'entraînement (10) étant entraîné directement ou indirectement par la cloche d'embrayage (14).

**4.** Boîte de vitesses selon l'une des revendications précédentes, dans laquelle le compartiment d'embrayage (2)
